# EUROPEAN PATENT APPLICATION

(11) **EP 4 060 594 A1**
(43) Date of publication of application: **21.09.2022**
(21) Application number: 20887331.5
(22) Date of filing: 03.11.2020
(51) Int. Cl.: G06Q 30/06, A63F 13/35, A63F 13/60, G06Q 50/10

(54) **SYSTEM FOR REVENUE GENERATION VIA WEB GAME DISTRIBUTION AND METHOD THEREFOR**

(30) Priority: 15.11.2019 KR 20190146732; 08.10.2020 KR 20200129918
(71) Applicant: Fromthered Inc., Seodaemun-gu Seoul 03761 (KR)
(72) Inventor: SEO, Sang Wook, Seoul 07665 (KR)
(74) Representative: Rolinec, Mark
(86) International application number: PCT/KR2020/015237
(87) International publication number: WO 2021/096145

(57) **Abstract**

The present invention relates to a system for revenue generation via web game distribution, capable of generating revenue by distributing a produced web game, and a method therefor. The present invention comprises a game production and distribution server for receiving an input signal from a user terminal, wherein the game production and distribution server comprises a communication unit, a storage unit, a control unit, and a cost processing module and is characterized in calculating revenue by reflecting the number of transmission times a game corresponding to a game selection signal is selected and transmitted to the user terminal, and transmitting the calculated revenue to the user terminal of a corresponding game producer. The present invention has an effect of enabling a game to be intuitively produced even without specialized programming knowledge.

## Description

### [Technical Field]

The present invention relates to a system and method for creation of revenue through distribution of a web game, capable of creating revenue by distributing a produced web game.

### [Background Art]

With the development of a cloud server environment, types of web applications that can be executed in a browser without restrictions of platforms, as well as operating systems, are rapidly increasing.

Although the number of games developed with HTML5 in the world exceeded 3,000 cases, the domestic HTML5 game development technology and market are relatively small while involving slow technology distribution, and therefore, it is now required to attain competitiveness related to HTML5 technology which is a recent issue.

Further, a flash game as a web game has been activated but a problem has arisen in regard to security issues of flash-type games, and a game replaceable with them is required.

Further, as coding education for elementary/middle/high school students becomes mandatory, the need for solutions of application production necessary for coding education is gradually increasing.

Korean Patent Laid-Open Publication No. 10-2018-0027731 discloses a mobile content providing system, but it is not optimized for HTML5 but simply allows users to use game content information randomly selected by a user on another user's mobile terminal. Therefore, there are still problems in that the convenience of game content production may not be improved and, at the same time, a reward for use by other users could not be provided to game producers.

### [Disclosure]

### [Technical Problem]

Therefore, in order to solve the above problems, a first object of the present invention is to provide a system for creating profits through distribution of a web game, capable of bringing innovation to a web game industry, characterized in that: a game may be naturally produced according to a preset sequence in HTML5 environment thus enable intuitive game production without specialized programming knowledge; sound sources and graphic images can be shared; game production and distribution may be possible only with ideas; profits to the produced game may be shared with the producers; with respect to the produced game, procedures for an uploading and reviewing process, review results and confirmation of assessment opinions may more simply proceed; and, with regard to the distribution of the produced game, distribution profits may be provided to a game producer, thereby accommodating a win-win relationship between the game producer and a platform operator.

Further, a second object of the present invention is to provide a method for creating profits through distribution of a web game, capable of bringing innovation to a web game industry, characterized in that: a game may be naturally produced according to a preset sequence in HTML5 environment thus enable intuitive game production even without specialized programming knowledge; sound sources and graphic images can be shared; game production and distribution may be possible only with ideas; profits to the produced game may be shared with the producers; with respect to the produced game, procedures for an uploading and reviewing process, review results and confirmation of assessment opinions may more simply proceed; and, with regard to the distribution of the produced game, distribution profits may be provided to a game producer, thereby accommodating a win-win relationship between the game producer and a platform operator.

### [Technical Solution]

In order to achieve the first object, the present invention provides a system for creating profits through distribution of a web game, which includes a game production and distribution server for receiving an input signal from a user terminal, wherein the game production and distribution server includes: a communication unit to receive the input signal from the user terminal; a storage unit to store at least one among user information, a game production-related template and a produced game; and a control unit that selects a game corresponding to a game selection signal among the games stored in the storage unit when the input signal includes the game selection signal, and then, controls the communication unit to transmit the selected game to the user terminal, wherein the control unit includes a cost processing module that calculates a profit while reflecting the number of transmission of the game, which was transmitted to the user terminal by the communication unit after selecting the game in response to the game selection signal, and controls the communication unit to transmit the calculated profit to the user terminal of the corresponding game producer.

The control unit may further include a game list recommendation module that analyzes game selection propensity and game performance ability of a user using the user information, generates a game list corresponding to the analysis results, and controls the communication unit to transmit the generated game list to the user terminal.

The control unit may further include a game production template providing module that selects a game production template corresponding to a game production signal if the input signal includes the game production signal, and controls the communication unit to transmit the selected template to the user terminal.

The control unit may further include an advertisement providing module that analyzes a result of the user's game performance using the user information and controls the communication unit to transmit an advertisement corresponding to the analysis result to the user terminal.

When the input signal includes a game upload signal, the storage unit may store a produced game included in the game upload signal, while the control unit may further include a public review module that examines whether to disclose the produced game stored by the storage unit or not.

In order to achieve the second object, the present invention provides a method for creating profits through distribution of a web game, including: storing at least one among user information, a game production-related template and a produced game by a storage unit; receiving an input signal from a user terminal by a communication unit; if the input signal includes a game selection signal, selecting a game corresponding to the game selection signal among games stored in the storage unit by a control unit; transmitting the game, which was selected by the control unit, to the user terminal by the communication unit; calculating a profit by a cost processing module while reflecting the number of transmission of the game corresponding to the game selection signal to the user terminal by the communication unit after selecting the same; and controlling the communication unit to transmit the profit calculated by the cost processing module to a user terminal of a corresponding game producer.

### [Advantageous effects]

According to the system and method for creating profits through distribution of a web game of the present invention described above, effects of bringing innovation to a web game industry would be achieved such that: a game may be naturally produced according to a preset order in the HTML5 environment so as to enable intuitive game production even without specialized programming knowledge; sound sources and graphic images can be shared; game production and distribution may be possible only with ideas; profits to the produced game may be shared with the producers; with respect to the produced game, procedures for an uploading and reviewing process, review results and confirmation of assessment opinions may more simply proceed; and, with regard to the distribution of the produced game, distribution profits may be provided to a game producer, thereby accommodating a win-win relationship between the game producer and a platform operator.

### [Description of Drawings]

FIG. 1 illustrates a schematic configuration of a system for creating profits through web game distribution according to an embodiment of the present invention.
FIG. 2 illustrates a schematic configuration of a game production and distribution server which is one configuration of the present invention.
FIG. 3 illustrates a schematic configuration of a control unit which is one configuration of the present invention.
FIG. 4 is a schematic flow diagram showing a method for creating profits through web game distribution according to an embodiment of the present invention.

### [Detailed Description of Preferred Embodiments of Invention]

Terms and words used in the present specification and claims are not limited to the usual or dictionary meanings, should be interpreted as a meaning and concept consistent with the technical spirit of the present invention based on a principle that the inventor appropriately defines the concept of terms in order to describe the user's invention in the best way.

Throughout the present specification, when a part "includes" a component, it could mean that the above part does not exclude any other component but further includes any other component unless otherwise indicated. Further, in the specification of the present invention, terms such as "..part", "..device", "..member", "module", "apparatus", etc. may refer to a unit capable of processing one or more functions or operations, it should be noted that the above unit may be implemented in hardware, software or a combination of hardware and software.

The terms used in the embodiments of the present invention will be briefly described, and the present embodiments will be described in detail.

The terms used in the embodiments of the present invention have been selected from general terms that are currently widely used as possible while considering functions thereof in the present invention. However, these may vary depending on intention of a technician working in the field, precedent, emergence of new technologies, or the like. Further, in a specific case, there are terms arbitrarily selected by an applicant and, in this case, the meanings of the terms would be described in detail in the description of the corresponding embodiments. Therefore, the terms used in the present embodiments should be defined based on the meanings of the terms and the overall contents of the present embodiments rather than a simple name of each of the terms.

In the embodiments of the present invention, terms including ordinal number such as "first", "second", etc. may be used to describe different elements but these elements are not limited thereby. The above terms are used only for the purpose of distinguishing one component from another component. For example, without departing from the scope of the present invention, a first element may be referred to as a second element and, similarly, a second element may also be referred to as a first element. Further, the term "and/or" may include a combination of a plurality of related and mentioned items or any among a plurality of related and mentioned items.

Further, in the embodiments of the present invention, a singular expression may include a plurality of expressions unless the context clearly indicates otherwise.

Further, in the embodiments of the present invention, terms such as "include" or "have" are intended to designate the existence of features or numbers, steps, actions, components, parts or a combination thereof described in the specification, therefore, it is to be understood that the possibility of the presence or addition of one or more other features or numbers, steps, actions, components, parts or a combination thereof is not preliminarily excluded.

Further, in the embodiments of the present invention, the "module" or "unit" may execute at least one function or operation, and may be implemented as hardware or software, or a combination of hardware and software. Further, a plurality of "modules" or a plurality of "units" may be integrated into at least one module and implemented as at least one processor except for the "module" or "unit" that needs to be implemented wit specific hardware.

In addition, in the embodiments of the present invention, when a part is "connected" with another part, it is not only "directly connected" but also includes a case where the part is "electrically connected" with another part while interposing a different element therebetween.

Hereinafter, the embodiments of the present invention will be described in detail with reference to the accompanying drawings.

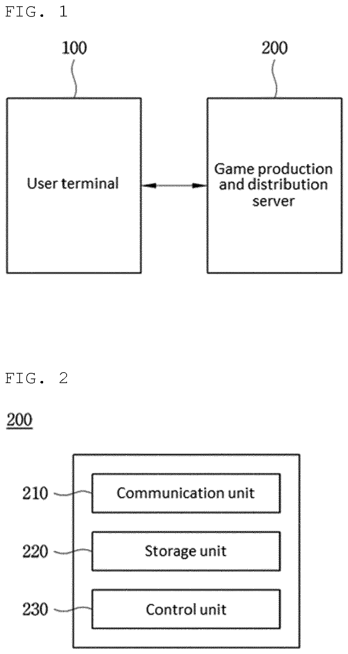

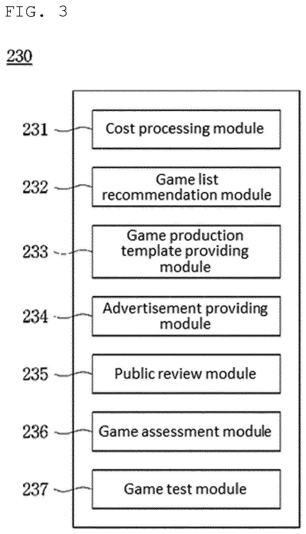

FIG. 1 illustrates a schematic configuration of a system for creating profits through web game distribution according to an embodiment of the present invention; FIG. 2 illustrates a schematic configuration of a game production and distribution server which is one configuration of the present invention; and FIG. 3 illustrates a schematic configuration of a control unit which is one configuration of the present invention.

Referring to FIGS. 1 to 3, the system for creating profits through web game distribution may include a user terminal 100 and a game production and distribution server 200. Herein, the game production and distribution server 200 may include a communication unit 210, a storage unit 220 and a control unit 230, wherein the control unit 230 may include a cost processing module 231, a game list recommendation module 232, a game production template providing module 233, an advertisement providing module 234, a public review module 235, a game assessment module 236 and a game test module 237.

More specifically, the user terminal 10 may display a smartphone, a tablet PC, a notebook PC and a desktop PC, and may be implemented as various electronic devices capable of transmitting and receiving data.

The game production and distribution server 200 may receive an input signal from the user terminal 100.

Herein, the input signal may include at least one among a game selection signal, a game production signal and a game upload signal.

In this case, the game selection signal refers to a signal indicating that the user has selected a game to play, and the game production signal refers to a signal indicating that the user will produce a game, and the game upload signal refers to a signal indicating that the user will upload the game produced or being produced to the server.

However, uploading a game that has been produced or is being produced to a server has a different meaning from publishing the game.

Further, the communication unit 210 may receive the input signal from the user terminal 100.

Further, the storage unit 200 may store at least one of user information, a game production-related template and a produced game.

Herein, the game production-related template means a template for producing various genres of games, specifically, may include a template for producing a game, which includes at least one among a platform game, a casual game, a racing game, a simulation game, an adventure game, a shooting game, a quiz game, an action game, an educational game, an arcade game, a puzzle game, a sports game, a board game, a role-playing game and a music game.

Further, the user terminal 100 may transmit the game production template produced by the user to the communication unit 210, while the storage unit 220 may store the game production template received by the communication unit 210 from the user terminal 100.

Further, when the input signal includes a game selection signal, the controller 230 may select a game corresponding to the game selection signal among the games stored in the storage unit 220 and then control the communication unit 210 to transmit the selected game to the user terminal 100.

At this time, the communication unit 210 may transmit a URL (Uniform Resource Locator) address connected to the selected game to the user terminal 100 in response to the game selection signal.

Further, the cost processing module 231 may calculate the profit while reflecting the number of transmission of the selected game, which was transmitted to the user terminal 100 by the communication unit 210 after selecting the game in response to the game selection signal.

Further, the cost processing module 231 may control the communication unit 210 so that the communication unit 210 transmits the calculated profit to the user terminal 100 of a corresponding game producer.

Herein, the cost processing module 231 may control the communication unit 210, so that the calculated profit transmitted by the communication unit 210 to the user terminal 100 may include depositing real cash to a set account of the user, alternatively, may include sending a separate coin having the same value as cash to the set account of the user.

That is, transmitting the profit may include depositing an amount corresponding to the profit into an account so that a user of the actual user terminal 100 can use the same as cash.

The user of the user terminal 100 may check and use the cash deposited in the set account, alternatively, a separate coin having the same value as the cash may be converted into cash and used.

Further, the game list recommendation module 232 may analyze game selection propensity and game performance ability of the user using the user information, generate a game list corresponding to the analysis result, and then control the communication unit 210 to transmit the generated game list to the user terminal 100.

More specifically, the game list recommendation module 232 may select a game in a genre preferred by the user while reflecting the genre of games frequently selected by the user in relation to the user's game selection propensity.

Herein, in the case of the genre of games frequently selected by a user, it may mean the number of times that the user selects a game for each genre.

Further, the game list recommendation module 232 may analyze the game performance ability of a user, determine a game performance level of the user, and then select a game corresponding to the user's game performance ability while reflecting the determined result.

That is, a game stored in the storage unit 220 and opened to the user may have a difficulty level set for each game.

The difficulty level for each game may be directly set by the user who produced the game, or may be automatically set according to the feedback of the user who played the game.

In consideration of the difficulty level for each game, the game list recommendation module 232 may utilize various indicators that can determine the user's game ability such as whether the user has cleared a corresponding game, a clear time of the corresponding game, etc., so as to determine the game performance ability of the user. As a result of the determination, the game list recommendation module 232 may select a game having a difficulty level corresponding to the user's game performance ability while reflecting the same.

Further, when the input signal includes a game production signal, the game production template providing module 233 may select a game production template corresponding to the game production signal and then control the communication unit 210 to transmit the selected template to the user terminal 100.

In this regard, the template may be sequentially executed or opened in the user terminal 100 so that the user can use the same for each game production stage, and the template may mean providing objects necessary for game production wherein the necessary objects in relation to game production may include not only various game-related information such as image setting, collision area setting, player operation setting, etc., but also information related to whether or not to insert an advertisement so as to determine whether or not to insert an advertisement inside the corresponding produced game.

Further, the template may be set to implement the object necessary for game production according to the passage of time or according to the order of game production.

In other words, when the user terminal 100 receives the template through the communication unit 210, the user terminal 100 may sequentially provide the received template to the user in response to the template providing order set for each game genre.

Herein, the provision of templates to the user sequentially may mean that the templates are sequentially executed, unpublished templates are sequentially disclosed, and the like.

That is, this is not meaning that the user produces games disorderedly by simply providing one template to the user terminal 100. Instead, in the case of the present invention, a user may use templates according to a preset order so that a game can be easily produced when the user uses only the provided templates in sequence.

At this time, the preset order may be set differently according to the genres of games.

Further, the preset order may include various matters such as an order of using templates, selection and arrangement of objects, and the like.

As such, using the templates in a preset order, the user may conveniently create a game even if they do not have high understandings and knowledge in regard to game production or coding.

Further, the game production template providing module 233 may set the user's rating differently in consideration of the number of game executions by a user, the number of game productions (the number of times of game production)], the number of produced games (the number of games that have completely been produced), and the number of public games (the number of games that have completely been produced and then disclosed to general users), etc., and, in order to provide the template corresponding to the set rating to the user, may control the communication unit 210 to transmit the template corresponding to the set rating to the user terminal 100.

The template corresponding to the set rating may include an additional template separate from the existing templates generally provided to the user.

Further, when a separate cost is deposited from the game producer, the game production template providing module 233 may provide the additional template only to the producer who has deposited the cost.

Further, the game production template providing module 233 may disclose the game production template produced by the user to general users other than the user who produced the game production template, so that the general users can use the above game production template produced by the user.

In other words, if a game production template corresponding to a game production signal is the game production template produced by the user, the corresponding game production template is selected and the communication unit 210 may be controlled to transmit the selected template to the user terminal 100.

The cost processing module 231 may calculate the profit while reflecting the number of transmission of a selected template to the user terminal 100 by the communication unit 210 after selecting the game production template corresponding to a game production signal.

Further, the cost processing module 231 may control the communication unit 210 to transmit the calculated profit to the user terminal 100 of a producer who produced the corresponding game production template.

Further, the advertisement providing module 234 may analyze a result of the user's game performance using the user information, and then control the communication unit 210 to transmit an advertisement corresponding to the analysis result to the user terminal 100.

Herein, the user information may include user's preferred game genre, user's age, user's interest field, and the like. Further, the result of user's game performance may include a game playing time of the user, user's preferred game genre, and the like.

That is, the advertisement providing module 234 may control the communication unit 210 to transmit an advertisement desirable for the user to the user terminal 100 while reflecting the corresponding content.

Further, when the input signal includes a game upload signal, the storage unit 220 may store a produced game included in the game upload signal. Further, the public review module 230 may examine whether or not to disclose, which means whether or not to disclose the produced game stored in the storage unit 220 to general users.

The produced game included in the game upload signal may be a game that has been produced or a game being produced.

The public review module 235 may review the produced game stored in the storage unit 220 and, if it is confirmed that a reason for non-disclosure is included in the produced game, may control the communication unit 210 to transmit the confirmation result to the user terminal 100 of the user who produced the game.

Further, when it is confirmed that the reason for non-disclosure is included in the production game, the public review module 235 may control the produced game not to be disclosed to general users.

As such, controlling the produced game produced to be closed (or not to be disclosed) to general users by the public review module 235 may include controlling the communication unit 210 not to transmit content related to the corresponding game to the user terminal 100.

In this case, the reason for non-disclosure may be, for example, inclusion of harmful contents (violence, spam, fraud, hate, etc.), inclusion of nude or sexual content, and inclusion of gambling content, etc., but is not limited thereto.

Further, the public review module 230 may review a produced game and thumbnail of the produced game ("produced game thumbnail") stored in the storage unit 220 for uploading by the user and, if the produced game thumbnail has no relation with the produced game stored in the storage unit 220 by the user, that is, does not correspond thereto, may control the produced game not to be disclosed.

Comparison between the produced game and the produced game thumbnail may determine whether there is a correlation between a user's description of the produced game and the produced game thumbnail or not.

Further, even though the public review module 235 controls to disclose the produced game, when it is determined that there is no correlation between the produced game thumbnail and the produced game through feedback from the game users, it is possible to modify and control the produced game not to be disclosed.

As such, controlling the corresponding produced game not to be disclosed to general users by the public review module 235 may include controlling the communication unit 210 not to transmit the corresponding game-related content to the user terminal 100.

Further, the game assessment module 236 may assess the corresponding game by reviewing the produced game stored in the storage unit 220.

Assessment of a game by the game assessment module 236 may be performed by predicting the popularity (number of plays) of the corresponding game.

More specifically, the game assessment module 236 may compare a specific produced game stored in the storage unit 220 with other produced games previously stored in the storage unit 220, in order to determine similarity between the specific produced game and other produced games. Further, based on the determined similarity, the popularity (number of plays) of the specific produced game may be predicted.

The game assessment module 236 may determine a similarity between a specific produced game and another produced game in consideration of user's description of a produced game, types of objects, arrangement of objects, a change in objects over time, etc.

For example, when comparing the similarity between a specific produced game A and a plurality of other produced games and detecting game B with the highest similarity, the public review module 235 may predict the popularity of game A (number of plays) based on the actual popularity (number of plays) of game B.

Further, when comparing the similarity between the specific produced game A and a plurality of other produced games and detecting game B with the highest similarity, the game assessment module 236 may determine advantages and disadvantages of the specific produced game A as compared to the game B.

At this time, the advantages and disadvantages may refer to a game proceeding speed, a difficulty level of the game as the general user feels, a playing time of the game, or the like.

Further, the game assessment module 236 may review the specific produced game stored in the storage unit 220 and determine a similarity between the specific produced game and other produced games, and then may control the communication unit 210, which has transmitted a game upload signal for the specific produced game to the user terminal 100, to transmit at least one among the above determined similarity, a predicted popularity (number of plays) of the specific produced game based on the determined similarity and advantages and disadvantages of the specific produced game compared to other produced games, to the user terminal 100.

Further, the game test module 237 may control the communication unit 210 to transmit a test mode for produced game to the user terminal 100, so that the user can test the produced game.

The user terminal 100 may execute the received test mode for produced game to check whether or not there is a bug in the actually produced game.

Further, the produced game test mode transmitted by the communication unit 210 to the user terminal 100 may provide the user terminal 100 with a general game bug situation, reasons and solutions relating thereto. If a bug occurs in a game directly produced by the user of the user terminal 100, reasons and solutions relating to the corresponding bug may be provided to the user terminal 100.

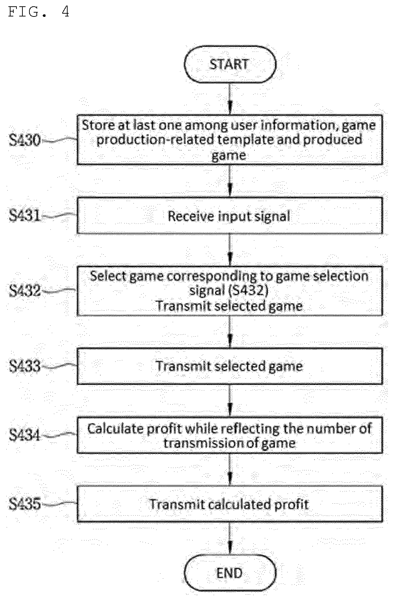

FIG. 4 is a diagram illustrating a schematic flow of a method for creating profits through web game distribution according to an embodiment of the present invention.

Referring to FIG. 4, the storage unit 220 may store at least one of user information, a game production-related template and a produced game (S430).

Further, the communication unit 210 may receive an input signal from the user terminal 100 (S431).

Further, when an input signal includes a game selection signal, the control unit 230 may select a game corresponding to the game selection signal among games stored in the storage unit 220 (S432).

Further, the communication unit 210 may transmit the game selected by the control unit 230 to the user terminal 100 (S433) .

Further, the cost processing module 231 may calculate a profit while reflecting the number of transmission of a selected game, which was transmitted to the user terminal 100 by the communication unit 210 after selecting the game in response to the game selection signal (S434).

Further, the cost processing module 231 may control the communication unit 210 to transmit the calculated profit to the user terminal 100 of a corresponding game producer (S435).

As described above, the configuration and operation of the system and method for creating profits through web game distribution according to an embodiment of the present invention may be implemented. Meanwhile, although specific embodiments have been described in the specification of the present invention, but various modifications may also be possible without departing from the scope of the present invention.

Although the present invention has been described above with reference to limited embodiments and drawings, the present invention is not limited thereto and various modifications and variations are of course possible by those skilled in the art.

Those skilled in the technical field related to the present embodiment will appreciate that modifications and variations may be implemented within a range not departing from the essential characteristics of the above description. Therefore, the methods of disclosure should be considered from an explanatory point of view rather than a restricted point of view. The scope of the present invention is shown in the claims rather than the above description, and all differences within the scope equivalent thereto should be construed as being included in the present invention.

## Claims

1. A system for creating profits through distribution of a web game, which comprises a game production and distribution server for receiving an input signal from a user terminal,
wherein the game production and distribution server includes:
a communication unit to receive the input signal from the user terminal;
a storage unit to store at least one among user information, a game production-related template and a produced game; and
a control unit that selects a game corresponding to a game selection signal among the games stored in the storage unit when the input signal includes the game selection signal, and then, controls the communication unit to transmit the selected game to the user terminal,
wherein the control unit includes a cost processing module that calculates a profit while reflecting the number of transmission of the game, which was transmitted to the user terminal by the communication unit after selecting the game in response to the game selection signal, and then controls the communication unit to transmit the calculated profit to the user terminal of the corresponding game producer.

2. The system according to claim 1, wherein the control unit further includes:
a game list recommendation module that analyzes game selection propensity and game performance ability of a user using the user information, generates a game list corresponding to the analysis results, and controls the communication unit to transmit the generated game list to the user terminal.

3. The system according to claim 1, wherein the control unit further includes:
a game production template providing module that selects a game production template corresponding to a game production signal in case the input signal includes the game production signal, and controls the communication unit to transmit the selected template to the user terminal.

4. The system according to claim 1, wherein the control unit further includes:
an advertisement providing module that analyzes a result of the user's game performance using the user information, and controls the communication unit to transmit an advertisement corresponding to the analysis result to the user terminal.

5. The system according to claim 1, wherein, when the input signal includes a game upload signal, the storage unit stores a produced game included in the game upload signal, and
the control unit further includes a public review module that examines whether to disclose the produced game stored by the storage unit or not.

6. A method for creating profits through distribution of a web game, comprising:
storing at least one among user information, a game production-related template and a produced game by a storage unit;
receiving an input signal from a user terminal by a communication unit;
in case the input signal includes a game selection signal, selecting a game corresponding to the game selection signal among games stored in the storage unit by a control unit;
transmitting the game, which was selected by the control unit, to the user terminal by the communication unit;
calculating a profit by a cost processing module while reflecting the number of transmission of the game corresponding to the game selection signal to the user terminal by the communication unit after selecting the same; and
controlling the communication unit to transmit the profit calculated by the cost processing module to a user terminal of a corresponding game producer.
